(19) Europäisches Patentamt
European Patent Office
Office européen des brevets

(11) Publication number: 0 055 486
B1

(12) EUROPEAN PATENT SPECIFICATION

(45) Date of publication of patent specification: 17.04.85

(51) Int. Cl.[4]: C 01 F 7/20, C 01 F 7/50, B 01 D 11/04, C 22 B 3/00

(21) Application number: 81110824.0

(22) Date of filing: 29.12.81

# (54) Process for producing aluminum oxide.

(30) Priority: 29.12.80 JP 187599/80

(43) Date of publication of application:
07.07.82 Bulletin 82/27

(45) Publication of the grant of the patent:
17.04.85 Bulletin 85/16

(84) Designated Contracting States:
DE FR GB NL

(56) References cited:
EP-A-0 030 067
FR-A-2 351 055
GB-A-1 311 614
US-A-3 314 749
US-A-4 172 879
US-A-4 224 287

(73) Proprietor: Solex Research Corporation of Japan
23-9, Maruyama-cho
Shibuya-ku Tokyo (JP)

(72) Inventor: Watanabe, Morio
8-23-22, Minamitsukakuchi-cho
Amagasaki-shi Hyogo-ken (JP)
Inventor: Nishimura, Sanji
13-8, Fukakusa Nanmei-cho Fushimu-ku
Kyoto-shi Kyoto-fu (JP)
Inventor: Watanabe, Nobuatsu
136 Uguisudai
Nagaokakyo-shi Kyoto-fu (JP)

(74) Representative: Vossius Vossius Tauchner Heunemann Rauh
Siebertstrasse 4 P.O. Box 86 07 67
D-8000 München 86 (DE)

EP 0 055 486 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a process for producing aluminum oxide by heating compounds containing aluminum and fluorine in a gas stream containing oxygen or $H_2O$.

In the production of metallic aluminum, it has been common practice to produce alumina by leaching raw materials containing aluminum, such as bauxite, with sodium hydroxide, then hydrolyzing the sodium aluminate thus obtained so as to obtain aluminum hydroxide which is calcined to give alumina, and then subjecting the powdered alumina to electrolytic reduction in a fused cryolite bath to obtain metallic aluminum.

However, the following disadvantages are found in the conventional production process of alumina:

(1) A high amount of energy is required for concentrating sodium hydroxide diluted in the hydrolysis process, in order to recover the used sodium hydroxide.

(2) The disposal of leached residues into the sea causes environmental problems.

It is the object of the invention to provide a novel process for producing alumina, which avoids the drawbacks found in conventional alkaline leaching and hydrolysis processes. The attainment of this object is based on the art of recovering metals via metal ammonium fluorides.

The subject matter of the invention is a process for producing aluminum oxide characterized in that

(1) aluminum ions are extracted from aqueous solution with an organic solvent containing one or more compounds selected from the groups of alkyl phosphoric acids, alkyl phenyl phosphoric acids, alkyl and aryl thio phosphoric acids, carboxylic acids and hydroximes together with a petroleum hydrocarbon as diluent;

(2) aluminum compounds containing fluorine are prepared by stripping the aluminum ions contained in the organic solvent of step (1) by contacting the organic solvent with an aqueous solution containing one or more compounds selected from the groups of HF, $NH_4HF_2$, $NH_4F$ or $KHF_2$, and simultaneously the organic solvent is regenerated; and

(3) aluminum oxide is produced by heating the aluminum compounds containing fluorine resulting from step (2) in a gas stream containing oxygen or $H_2O$.

The invention is further described with reference to the attached drawings.

Fig. 1 shows the process flowsheet of this invention.

Fig. 2 is a graph showing the relationship between temperature and weight decrease rate when heating aluminum compounds containing fluorine in an oxygen gas stream.

Fig. 3 is a graph showing the relationship between temperature and weight decrease rate when heating aluminum compounds containing fluorine in a hydrogen gas stream including a small amount of water.

Aluminum ions extracted into an organic solvent are transferred into an aqueous phase from the organic phase by contacting the latter with a stripping agent containing one or more compounds selected from the group consisting of HF, $NH_4HF_2$, $NH_4F$ and $KHF_2$. Simultaneously, the organic solvent is regenerated; (see Fig. 1 — aluminum ion stripping process).

The aluminum ions transferred into the aqueous phase produce crystalline compounds containing fluorine according to the following reactions:

$$R_3Al + 3HF \rightleftarrows 3HR + AlF_3 \downarrow$$

$$R_3Al + 3NH_4HF_2 \rightleftarrows 3HR + (NH_4)_3AlF_6 \downarrow$$

$$R_3Al + 3KHF_2 \rightleftarrows 3HR + K_3AlF_6 \downarrow$$

where HR indicates the regenerated organic solvent comprising an ion exchanger of the proton type.

The crystalline product is removed by filtration (see Fig. 1 — separation process) and the regenerated organic solvent is recycled for the extraction of aluminum ions. The crystals of the compounds containing fluorine may be remelted and recrystallized in order to produce high-purity alumina if necessary.

In the next stage, the resultant aluminum compounds containing fluorine can be converted into alumina by heating them in a gas stream containing oxygen or $H_2O$ in accordance with the following reaction formula (see Fig. 1 — thermal decomposition process)

$$2AlF_3 + 1\frac{1}{2}O_2 \rightleftarrows Al_2O_3 + 6F$$

$$2(NH_4)_3AlF_6 + 3H_2O \rightleftarrows Al_2O_3 + 6NH_4F + 6HF$$

$$2K_3AlF_6 + 3H_2O \rightleftarrows Al_2O_3 + 6KF + 6HF$$

The by-products $NH_4F$ and HF are absorbed and collected in an aqueous solution and reused for stripping the aluminum ions extracted into the organic solvent (see Fig. 1 — gas absorption process).

If the conversion of the fluorine-containing aluminum compound to alumina is to be effected by a gas stream containing $H_2O$, the gas stream preferably comprises hydrogen containing a small amount of water, preferably not more than 0.5 g of water per kg of hydrogen gas stream. The aluminum compounds

containing fluorine are decomposed into aluminum oxide and HF or $NH_4F$ by heating them in the hydrogen gas stream. The resultant aluminum oxide is not always $Al_2O_3$ but can be regarded as a lower aluminum oxide as determined by X-ray diffraction spectrum analysis. Metallic aluminum can be obtained by fused-salt electrolysis of the above aluminum oxide charged into an $Na_3AlF_6$ bath contained in an electrolytic cell.

According to the invention, the aluminum ions can be extracted from different kinds of solutions containing aluminum, such as solutions of sulfuric acid, nitric acid, hydrofluoric acid, hydrochloric acid, etc. The extraction is effected with an organic solvent containing one or more compounds selected from the groups of alkyl phosphoric acids, alkyl and aryl thio phosphoric acids, carboxylic acids and hydroximes together with a petroleum hydrocarbon as diluent.

The alkyl phosphoric acids preferably used as an extractant in this invention are selected from the compounds (A)—(F) shown below:

(A)

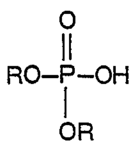

(B)

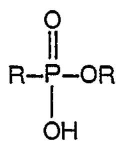

(C)

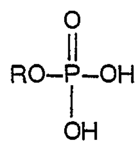

(D)

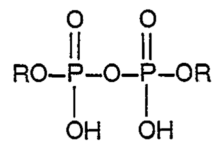

(E)

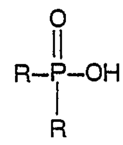

(F)

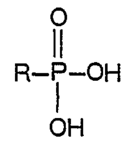

where R is an alkyl radical containing 4 to 22 carbon atoms.

D2EHPA(di-2-ethyl hexyl phosphoric acid) shown in the example set forth hereinafter belongs to group (A) with $C_8H_{17}$ as alkyl radicals.

Alkyl phenyl phosphoric acids having the following general formula may also be used:

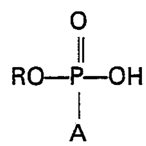

R = alkyl radical containing 4 to 22 carbon atoms
A = phenyl
OPPA (octyl phenyl P.A.) shown in the example belongs to this group of compounds (A = $C_6H_5$—).

Alkyl or aryl thio phosphoric acids preferably used in this invention as extractants are selected from the compounds shown below:

(G)

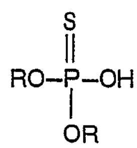

(H)

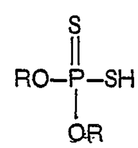

where R is an alkyl or aryl radical containing 4 to 22 carbon atoms.

D2EHDTPA(di-2-ethyl hexyl dithio phosphoric acid) shown in the example set forth hereinafter belongs to group (H) with $C_8H_{17}$ as alkyl radical.

An example of a hydroxime used as extractant in this invention is shown below:

(I)

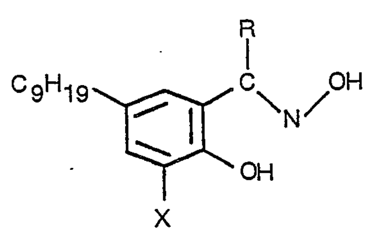

where R is

H, $CH_3$, 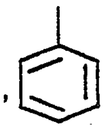 or 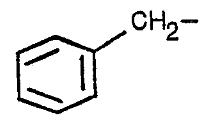

and X is Cl or H.

Of course, similar hydroximes can be used.

In SME-529 (tradename of a product by Shell Chemical Co.) used in the example set forth hereinafter, R is $CH_3$ and X is H.

The carboxylic acids used as extractants in this invention include the compounds shown below:

(J)

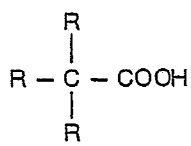

(K)

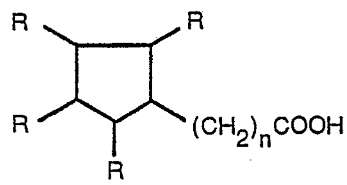

where R is an alkyl radical having 4 to 18 carbon atoms.

Versatic acid 10(V-10) (tradename of a product by Shell Chemical Co.) shown in the example set forth hereinafter belongs to group (J) having alkyl radicals with 9 to 11 carbon atoms.

The diluent used in this invention is an aliphatic or aromatic petroleum hydrocarbon, but a mixture of these compounds can also be used. Moreover, commercially available mixtures of various hydrocarbons, such as kerosene, may often be used.

Although the concentration of the extractant in the organic solvent is determined by the aluminum ion concentration to be extracted into the organic phase, by the nature of the aqueous solution containing aluminum ions to be treated and by the type and amount of the included impurities, it commonly lies in the range of 2 to 80 volume%.

The present invention will be better understood from the following description of embodiments.

Example

An aluminum compound containing fluorine was obtained by stripping aluminum ions extracted into the organic solvents shown below with the following stripping agents. The concentration of aluminum ions in the organic solvent was 8 to 11 g/l.

| Organic solvent | Stripping agent | Stripping % | Product |
|---|---|---|---|
| 30% D2EHPA+70% isoparaffine | 50 g/l HF | 98.7% | $AlF_3$ |
| 20% D2EHDTPA+10% OPPA+kerosene | 60 g/l $NH_4HF_2$ | 81.4% | $(NH_4)_3AlF_6$ |
| 20% D2EHPA+20% V-10+n-paraffine | 100 g/l $NH_4HF_2$ | 99.9% | $(NH_4)_3AlF_6$ |
| 30% V-10+10% OPPA+isoparaffine | 50 g/l HF | 69.9% | $AlF_3$ |
| 30% SME-529+5% V-10+kerosene | 80 g/l $KHF_2$ | 98.8% | $K_3AlF_6$ |
| 10% D2EHDTPA+20% SME-529+kerosene | 60 g/l $NH_4HF_2$ | 84.1% | $(NH_4)_3AlF_6$ |

It was found by X-ray diffraction spectrum analysis that the crystalline $(NH_4)_3AlF_6$ obtained by the stripping includes a small amount of $AlF_3$ and thus the product is not always the same chemical species.

Fig. 2 shows the weight decrease of the resultant aluminum compound containing fluorine by heating it in a gas stream containing 21% oxygen.

Fig. 3 shows the weight-decrease of the aluminum compound containing fluorine by heating it in a hydrogen gas stream containing a small amount of $H_2O$.

Aluminum oxide ($Al_2O_3$) or aluminum fluoride ($AlF_3$) can be produced by exposure to heat in a hydrogen gas stream, depending on the composition and temperature of the hydrogen gas stream.

In Fig. 2, the thermal decomposition of ammonium aluminum fluoride into $AlF_3$ and $NH_4F$ starts at point (A) and is completed at point (B)

$$(NH_4)_3AlF_6 \rightarrow AlF_3 + 3NH_4F \uparrow$$

The following chemical reaction starts at point (C) and is completed at point (D)

$$AlF_3 + \frac{3}{4}O_2 \rightarrow 1/2\ Al_2O_3 + 3F \uparrow$$

Therefore, if aluminum fluoride is supplied, the process between point (A) and point (B) does not take place.

As shown in Fig. 3 illustrating the weight-decrease by exposure to heat in a hydrogen gas stream, the thermal decomposition of ammonium aluminum fluoride into $AlF_3$ and $NH_4F$ starts at point (A) and is completed at point (B).

$$(NH_4)_3AlF_6 \rightarrow AlF_3 + 3NH_4F \uparrow$$

$AlF_3$ starts decomposing with a small amount of $H_2O$ at point (C) and is converted into $Al_2O_3$ and HF at point (D).

$$AlF_3 + \frac{3}{2}H_2O \rightarrow 1/2\ Al_2O_3 + 3HF \uparrow$$

X-ray diffraction spectrum analysis confirms that an aluminum oxide lower than $Al_2O_3$ may be produced depending on the amount of $H_2O$.

**Claim**

A process for producing aluminum oxide characterized in that

(1) aluminum ions are extracted from aqueous solutions with an organic solvent containing one or more compounds selected from the groups of alkyl phosphoric acids, alkyl phenyl phosphoric acids, alkyl and aryl thio phosphoric acids, carboxylic acids and hydroximes together with a petroleum hydrocarbon as diluent;

(2) aluminum compounds containing fluorine are prepared by stripping the aluminum ions contained in the organic solvent of step (1) by contacting the organic solvent with an aqueous solution containing one or more compounds selected from the groups of HF, $NH_4HF_2$, $NH_4F$ or $KHF_2$, and simultaneously the organic solvent is regenerated; and

(3) aluminum oxide is produced by heating the aluinum compounds containing fluorine resulting from step (2) in a gas stream containing oxygen or $H_2O$.

**Patentanspruch**

Verfahren zur Herstellung von Aluminiumoxid, dadurch gekennzeichnet, daß man

(1) Aluminiumionen aus wäßrigen Lösungen mit einem organischen Lösungsmittel extrahiert, das mindestens eine Verbindung aus der Gruppe der Alkylphosphorsäuren, Alkylphenylphosphorsäure, Alkyl- und Arylthiophosphorsäuren, Carbonsäuren und Hydroxime zusammen mit einem Erdölkohlenwasserstoff als Verdünnungsmittel enthält;

(2) fluorhaltige Aluminiumverbindungen durch Abstreifen der in dem organischen Lösungsmittel der Stufe (1) enthaltenen Aluminiumionen erzeugt, indem man das organische Lösungsmittel mit einer wäßrigen Lösung in Berührung bringt, die mindestens eine Verbindung aus der Gruppe HF, $NH_4HF_2$, $NH_4F$ oder $KHF_2$ enthält, wobei gleichzeitig das organische Lösungsmittel regeneriert wird; und

(3) Aluminiumoxid durch Erhitzen der aus Stufe (2) stammenden fluorhaltigen Aluminiumverbindungen in einem Sauerstoff oder $H_2O$ enthaltenden Gasstrom herstellt.

**Revendication**

Procédé pour la production d'oxyde d'aluminium, caractérisé en ce que

(1) des ions aluminium sont extraits, à partir de solutions aqueuses, avec un solvant organique contenant un ou plusieurs composés choisis dans le groupe se composant des acides alkylphosphoriques, des acides alkylphénylphosphoriques, des acides alkyl et arylthiophosphoriques, des acides carboxyliques et des hydroximes avec un hydrocarbure du pétrole comme diluant;

(2) des composés d'aluminium contenant du fluor sont préparés en enlevant les ions aluminium contenus dans le solvant organique de l'étape (1) en mettant en contact le solvant organique avec une solution aqueuse contenant un ou plusieurs composés choisis dans le groupe se composant de HF, $NH_4HF_2$, $NH_4F$ ou $KHF_2$, et simultanément le solvant organique est régénéré, et

(3) de l'oxyde d'aluminium est produit en chauffant les composés d'aluminium contenant du fluor, résultant de l'étape (2), dans un courant gazeux contenant de l'oxygène ou $H_2O$.

FIG.1

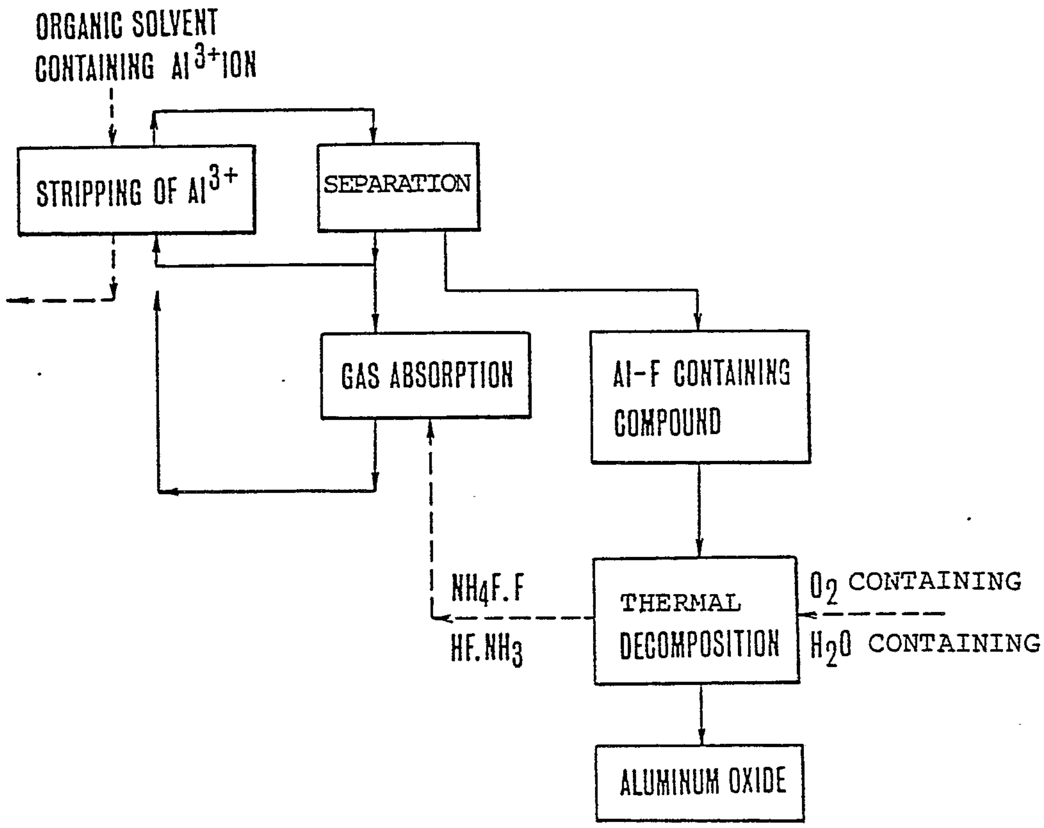
ORGANIC SOLVENT CONTAINING Al3+ION
STRIPPING OF Al3+
SEPARATION
GAS ABSORPTION
Al-F CONTAINING COMPOUND
THERMAL DECOMPOSITION
O2 CONTAINING
H2O CONTAINING
NH4F.F
HF.NH3
ALUMINUM OXIDE

FIG.2

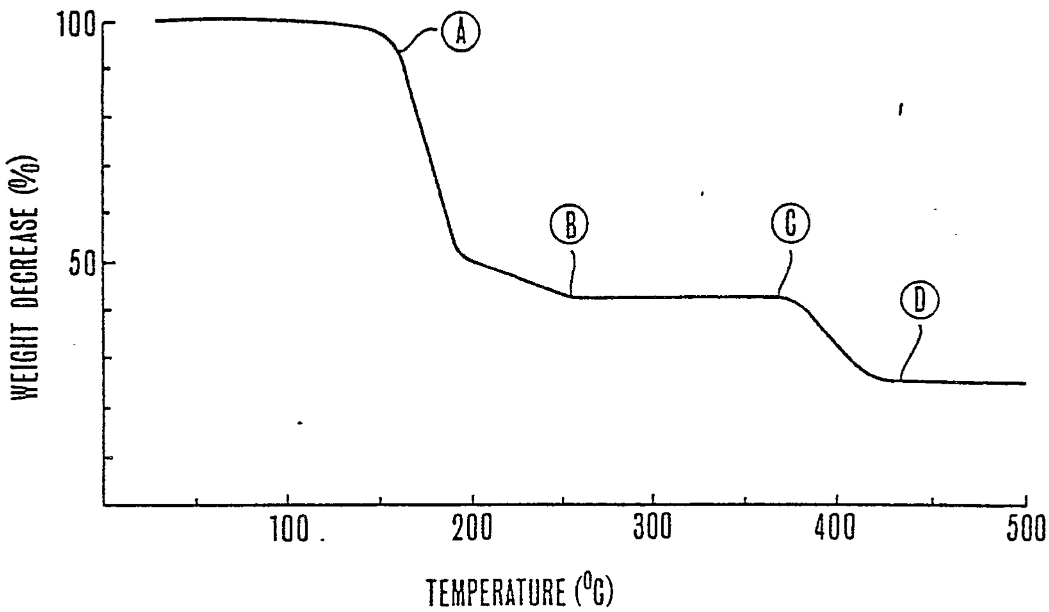
A
B
C
D
100
50
WEIGHT DECREASE (%)
100
200
300
400
500
TEMPERATURE (°C)

FIG.3

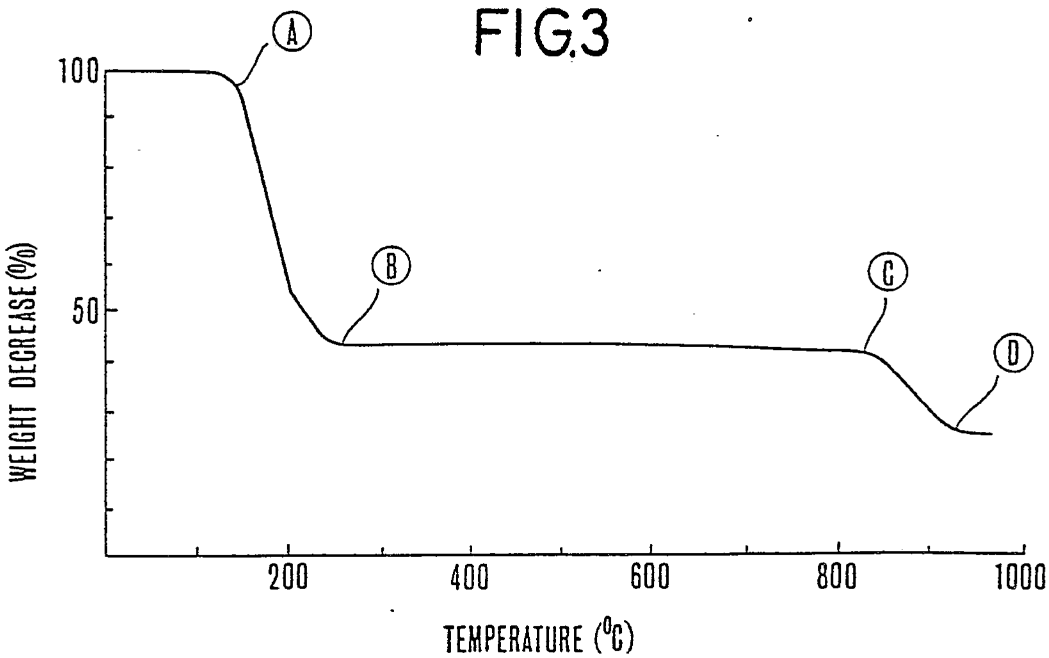
A
B
C
D
100
50
WEIGHT DECREASE (%)
200
400
600
800
1000
TEMPERATURE (°C)